# EUROPEAN PATENT APPLICATION

(11) **EP 2 733 923 A2**
(43) Date of publication of application: **21.05.2014**
(21) Application number: 13191393.1
(22) Date of filing: 04.11.2013
(51) Int. Cl.: H04N 5/232

(54) **Multiresolution depth from defocus based autofocus**

(30) Priority: 14.11.2012 US 201213677177
(71) Applicant: Sony Corporation, Tokyo 108-0075 (JP)
(72) Inventor: Miyagi, Kensuke, Sunnyvale, CA California 94086 (US); Li, Pingshan, Sunnyvale, CA California 94085 (US)
(74) Representative: McGowan, Cathrine

(57) **Abstract**

A hierarchical method of achieving auto focus using depth from defocus is described herein. The depth from defocus technique is performed hierarchically in the resolution that is determined to be optimal at each step. Where higher resolution gives the better accuracy but requires more computational costs, the optimal resolution is estimated based on the target accuracy and the possible max blur amount at each step, which determines the amount of the computation and the number of pixels in the focus area. The proposed multi-resolution depth-from-defocus-based autofocus enables the reduction in the required resource, which is beneficial in the system where resource is limited.

## Description

### FIELD OF THE INVENTION

The present invention relates to the field of image processing. More specifically, the present invention relates to autofocus.

### BACKGROUND OF THE INVENTION

An autofocus optical system uses a sensor, a control system and a motor to focus fully automatic or on a manually selected point or area. An electronic rangefinder has a display instead of the motor, and the adjustment of the optical system has to be done manually until indication. The methods are named depending on the sensor used such as active, passive and hybrid. Many types of autofocus implementations exist.

### SUMMARY OF THE INVENTION

Aspects and embodiments of the invention are set out in the appended claims. Combinations of features from the dependent claims may be combined with features of the independent claims as appropriate and not merely as explicitly set out in the claims.

A hierarchical method of achieving auto focus using depth from defocus is described herein. The depth from defocus technique is performed hierarchically in the resolution that is determined to be optimal at each step. Where higher resolution gives the better accuracy but requires more computational costs, the optimal resolution is estimated based on the target accuracy and the possible max blur amount at each step, which determines the amount of the computation and the number of pixels in the focus area. The proposed multi-resolution depth-from-defocus-based autofocus enables the reduction in the required resource, which is beneficial in the system where resource is limited.

In one aspect, a method of autofocusing programmed in a memory of a device comprises determining an optimal resolution based on estimating a maximum iteration number and a blur size fitting matching area, performing depth from defocus for the optimal resolution and repeating depth from defocus until autofocus at the optimal resolution is achieved. The method further comprises acquiring content. The content comprises a first image and a second image. The first image is acquired at a first lens position and the second image is acquired at a second lens position. The method further comprises implementing hierarchical motion estimation targeting the optimal resolution. The method further comprises determining if the content is in focus, if the content is in focus, then the method ends and if the content is out of focus, then the blur size and the possible maximum iteration number is determined based on the depth from defocus result. The method further comprises determining a new optimal resolution. The method further comprises determining if the new optimal resolution equals the previous optimal resolution, if the new optimal resolution equals the previous optimal resolution, the lens is moved to the estimated depth and the method returns to acquiring content and if the new optimal resolution does not equal the previous optimal resolution, the refinement motion estimation is implemented and the method returns to implementing depth from defocus. The optimal resolution comprises some or all of the following criteria: a highest resolution where a possible blur size fits in a matching area, the highest resolution where a depth from defocus process with a possible biggest iteration number is affordable in terms of computational cost and to estimate the possible maximum blur size based on the depth from defocus result at lower resolution. The device is selected from the group consisting of a personal computer, a laptop computer, a computer workstation, a server, a mainframe computer, a handheld computer, a personal digital assistant, a cellular/mobile telephone, a smart appliance, a gaming console, a digital camera, a digital camcorder, a camera phone, a smart phone, a portable music player, a tablet computer, a mobile device, a video player, a video disc writer/player, a television, and a home entertainment system.

In another aspect, a method of autofocusing programmed in a memory of a device comprises acquiring content, determining a blur size and a maximum iteration number based on a current lens position, determining an optimal resolution, implementing hierarchical motion estimation targeting the optimal resolution, implementing depth from defocus in the optimal resolution and determining if the content is in focus. The content comprises a first image and a second image. The first image is acquired at a first lens position and the second image is acquired at a second lens position. The method further comprises if the content is in focus, then the method ends and if the content is out of focus, then the blur size and the possible maximum iteration number is determined based on the depth from defocus result. The method further comprises determining a new optimal resolution. The method further comprises determining if the new optimal resolution equals the previous optimal resolution, if the new optimal resolution equals the previous optimal resolution, the lens is moved to the estimated depth and the method returns to acquiring content and if the new optimal resolution does not equal the previous optimal resolution, the refinement motion estimation is implemented and the method returns to implementing depth from defocus. The optimal resolution comprises some or all of the following criteria: a highest resolution where a possible blur size fits in a matching area, the highest resolution where a depth from defocus process with a possible biggest iteration number is affordable in terms of computational cost and to estimate the possible maximum blur size based on the depth from defocus result at lower resolution. The device is selected from the group consisting of a personal computer, a laptop computer, a computer workstation, a server, a mainframe computer, a handheld computer, a personal digital assistant, a cellular/mobile telephone, a smart appliance, a gaming console, a digital camera, a digital camcorder, a camera phone, a smart phone, a portable music player, a tablet computer, a mobile device, a video player, a video disc writer/player, a television, and a home entertainment system.

In another aspect, an apparatus comprises an image acquisition component for acquiring a plurality of images, a memory for storing an application, the application for: determining a blur size and a maximum iteration number based on a current lens position, determining an optimal resolution, implementing hierarchical motion estimation targeting the optimal resolution, implementing depth from defocus in the optimal resolution and determining if an image of the plurality of images is in focus and a processing component coupled to the memory, the processing component configured for processing the application. A first image of the plurality of images is acquired at a first lens position and the second image of the plurality of images is acquired at a second lens position. The application further comprises if the content is in focus, then the method ends and if the content is out of focus, then the blur size and the possible maximum iteration number is determined based on the depth from defocus result. The application further comprises determining a new optimal resolution. The application further comprises determining if the new optimal resolution equals the previous optimal resolution, if the new optimal resolution equals the previous optimal resolution, the lens is moved to the estimated depth and the method returns to acquiring content and if the new optimal resolution does not equal the previous optimal resolution, the refinement motion estimation is implemented and the method returns to implementing depth from defocus. The optimal resolution comprises some or all of the following criteria: a highest resolution where a possible blur size fits in a matching area, the highest resolution where a depth from defocus process with a possible biggest iteration number is affordable in terms of computational cost and to estimate the possible maximum blur size based on the depth from defocus result at lower resolution.

### BRIEF DESCRIPTION OF THE DRAWINGS

Embodiments of the invention will now be described with reference to the accompanying drawings, throughout which like parts are referred to by like references, and in which:
FIG. 1 illustrates an example of a step edge when the blur size is zero.
FIG. 2 illustrates an example of a blurred step edge.
FIG. 3 illustrates an example of a picture matching process according to some embodiments.
FIG. 4 shows the matching curves generated for the step edge for different displacement of the matching area in horizontal direction according to some embodiments.
FIG. 5 shows a subset of Figure 4, where the matching area has the step edge within the matching area when the image is in focus according to some embodiments.
FIG. 6 shows a higher resolution-based DFD result is able to be better than a lower resolution-based DFD according to some embodiments.
FIG. 7 shows an example of relationships among the blur size, iteration curve, affordable matching area (width and height), and number of Depth of Fields (DOFs) from the focus position for different resolutions according to some embodiments.
FIG. 8 illustrates a flowchart of a method of multi-resolution depth-from-defocus-based autofocus according to some embodiments.
FIG. 9 illustrates a block diagram of an exemplary computing device configured to implement the autofocus method according to some embodiments.

### DETAILED DESCRIPTION

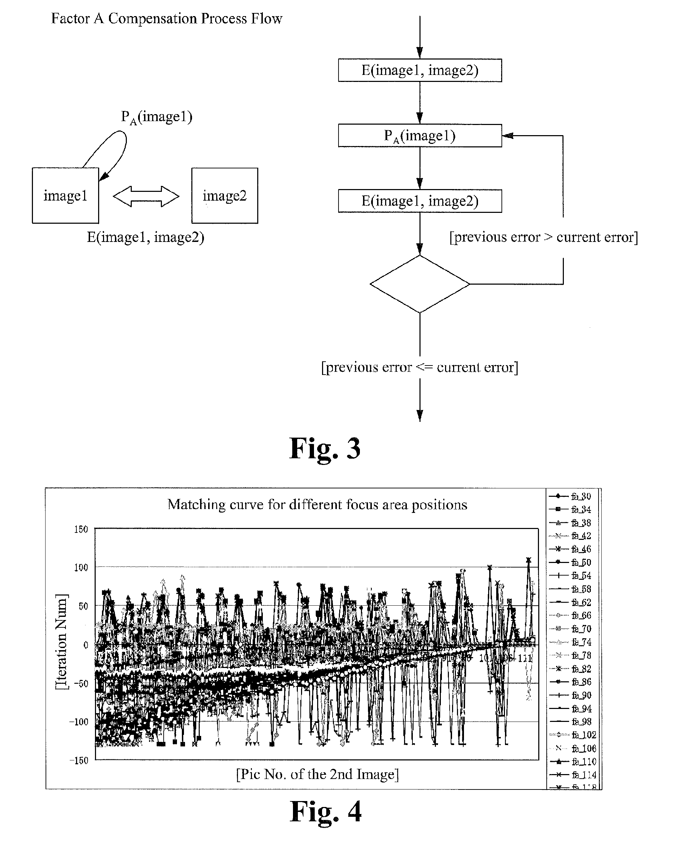

Certain terminology is used throughout the application which is described herein. Blur size is the total number of pixels in one direction (horizontal or vertical) that are altered due to Point Spread Function (PSF) of the optics. Iteration number is the number of the process P_{A} used for the convergence, which represents the amount of blur difference between the two images. Matching area is the area that is used for process E. Matching curve is a plot of the iteration number in vertical axis with depth position in the horizontal axis. Iteration curve is the same as the matching curve. Depth-From-Defocus (DFD) is the process to estimate the depth based on a procedures such as the one shown in Figure 3. Depth Of Field is DOF.

High accuracy in depth-from-defocus-based (DFD-based) autofocus results are able to be achieved under typical embedded system restrictions such as processor and hardware resource limitations. The following characteristics are able to be exploited using the DFD-based autofocus under such resource restrictions by a multi-resolution approach: processing DFD on a higher resolution is able to yield the better result, and containing blur within a matching area for DFD process is able to yield the better result.

There are some applications that conduct depth-from-defocus-based autofocus. An embedded system such as a personal digital camcorder or digital still camera are such examples.

In depth from defocus, it is important to know all or a majority of the blur (blurred edge, dot or texture) for the higher accuracy of estimated depth.

Although the blur-size or PSF size is able to be defined in several ways, it is able to be defined as the total number of pixels in one direction (horizontal or vertical) that are altered due to PSF of the optics.

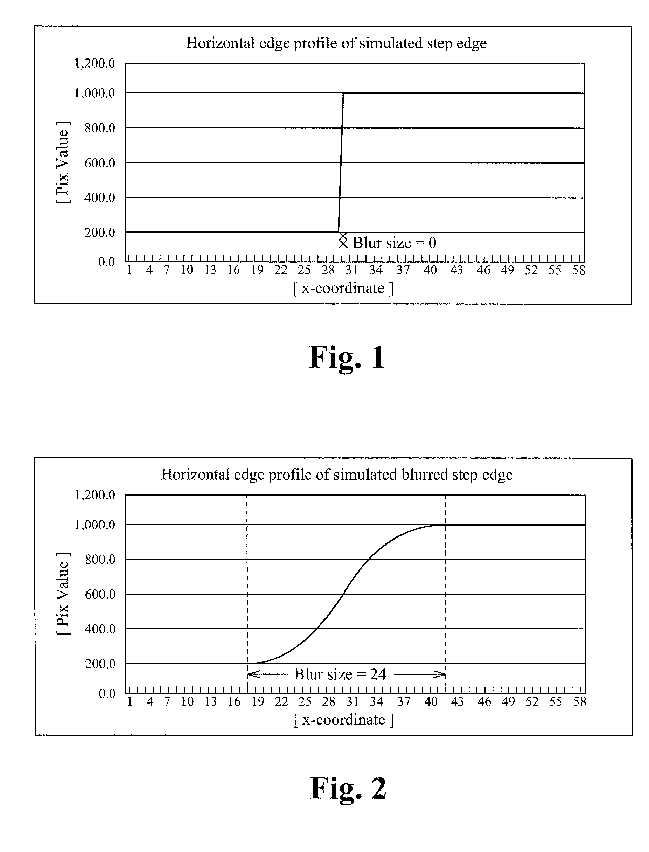

To better illustrate, a step edge scene is used as an example. For example, when the image is in focus, the blur size is zero. Figure 1 illustrates a case when the blur size is zero.

Figure 2 illustrates an example of a blur size in a blurred step edge. In Figure 2, the blur size is 24.

Furthermore, the blur-size is usually linearly proportional to the number of depths of field that exist between the object position and the lens focus position.

Also, the depth of the target object is able to be estimated based on the blur difference in more than one image that is captured with a different defocus level. The blur difference is able to be represented by the number of iterations in a picture matching process such as the process in Figure 3.

Supposing image1 and image2 in Figure 3 have different amounts of blur from one optic system, and image2 is sharper. The amount of the blur difference between the two images is able to be computed. The P_{A} process is able to be defined as a blur function that models the optic system well, which could be a simple 3 x 3 convolution kernel. Then, process E is defined to be an error generation function between the two images, which is able to be a simple Sum of Absolute Differences (SAD) function that works on a certain area of two images. By repeating the loop shown in Figure 3 until the previous error generated by process E becomes smaller than the newly generated error (or current error), the number of this repetition is able to be used to represent the blur difference between the two images. In some embodiments, registration of two images (such as motion compensation) is performed beforehand.

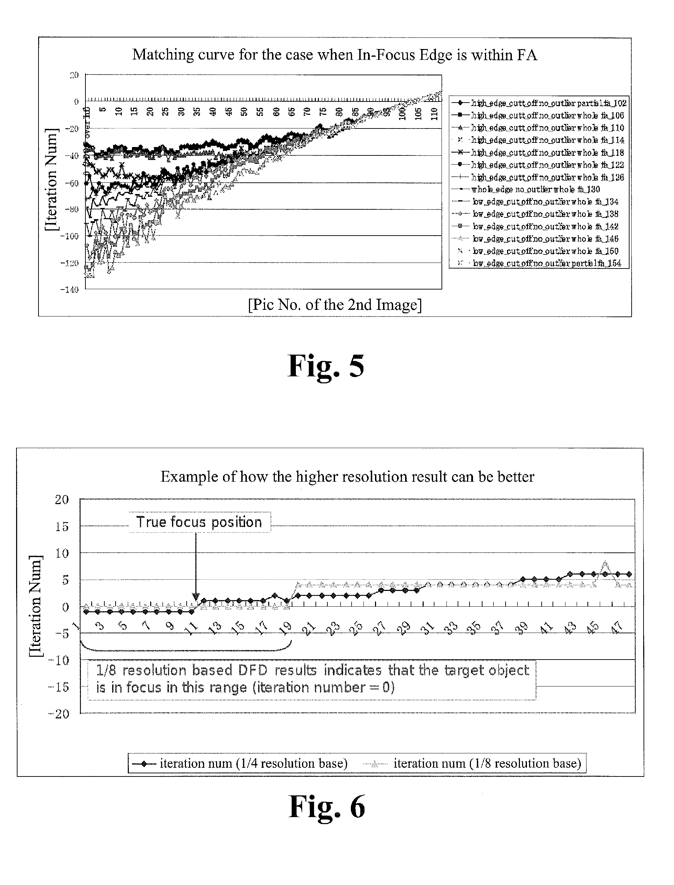

Having all or a major part of the blur within a matching area or the blur difference estimation between the two images is important in order to have accurate depth estimation. Figure 4 shows the matching curves generated for the step edge for different displacement of the matching area in horizontal direction. Figure 5 shows a subset of the Figure 4, where the matching area has the step edge within the matching area when the image is in focus. The matching curve becomes very noisy when there is no edge within the matching area.

The more the edge of the step edge scene deviates from the center of the matching area, the more the iteration curve deviates from the ideal curve. This is mainly because the iteration curve is impacted when the part of the blur edge is out of the matching area.

Since a higher resolution image contains more information, and the DFD process is able to yield better accuracy when performed at a higher resolution.

Figure 6 shows a higher resolution-based DFD result is able to be better than a lower resolution-based DFD. Where a 1/4 resolution-based DFD result is able to identify the true focus position of the target object, a 1/8 based resolution is not able to identify the true focus position.

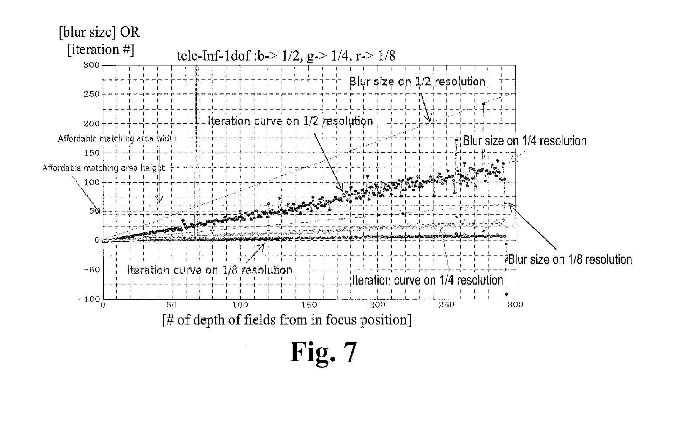

It is important to contain all or the majority of blur within a matching area in order to obtain accurate depth estimation or blur difference estimation results. Also, the DFD process is implemented in higher resolution in some embodiments. However, often in embedded optic systems such as digital cameras or camcorders, there is a limitation of processing and hardware resources including: accelerator, bandwidth, and memory, which limits the size of matching area and amount of computational intensity. Also, depending on the optical systems, the blur size is able to be very large. Figure 7 shows an example of relationships among the blur size, iteration curve, affordable matching area (width and height), and number of Depth of Fields (DOFs) from the focus position for different resolutions. Furthermore, performing a motion estimation on a higher resolution is often able to become too expensive in terms of computational cost.

The affordable matching area size is 60x45 (width, height) pixels in a certain embedded digital camera system, and the blur size and the iteration curve for 3 different resolutions (1/8, 1/4, and 1/2) are as shown in Figure 7. Also, the system is only able to afford up to around 64, 16, and 4 iteration numbers for 1/8, 1/4, and 1/2 resolution respectively (assuming that the one iteration in 1/4 resolution takes about 4 times more than in 1/8 resolution and one iteration in 1/2 resolution takes about 4 times more than in 1/4 resolution) iteration number for one resolution. In this environment, the objective is to achieve the final autofocus accuracy that is equivalent to that of 1/2 resolution DFD.

For example, the camera system has the total range of around 300 DOFs such as shown in Figure 7. If autofocus were to start from a nearest lens position that the camera is able to focus, the most extreme case will be the case when the target object is at infinity. In such case, the blur size will be expected to be around 250, 125, and 62.5 for 1/2, 1/4, and 1/8 resolution respectively. At this position, the DFD process at only 1/8 resolution seems feasible because the blur size is too big for matching area (60x45) for 1/4 and 1/2 resolution. However, DFD process in 1/8 resolution will not give us the accuracy equivalent to DFD process in 1/2 resolution.

The idea is to use the multi-resolution approach (low to high) to reduce the motion estimation cycle in DFD-based autofocus by starting motion estimation with full search range at the lower resolution (or the highest resolution allowed both in terms of computational and memory cost). DFD-based autofocus is repeated within the "optimal" resolution until autofocus is achieved with the desired accuracy. The information of the blur size or possible max blur size at a given lens position is used in order to determine the "optimal" resolution for performing the DFD process. In some embodiments, the "optimal" resolution is the one that satisfies some or all of the following criteria: the highest resolution where the possible blur size fits in the matching area, the highest resolution where the DFD process with the possible biggest iteration number is affordable in terms of computational cost and to estimate the possible max blur size based on the DFD result at a lower resolution.

Multi-resolution approach (low to high) in motion estimation, which is often called hierarchical motion estimation, is a technique to utilize. The idea is that if one were to find a motion vector at, for example, 1/2 resolution for M x N matching area with +-S in both horizontal and vertical direction, if this were done in a straightforward way, error calculation such as SAD calculation for M x N is computed for (S + S + 1) ^ 2 positions. However, simply doing motion vector search in a lower resolution such as 1/4 resolution, SAD calculation of M/2 x N/2 for (S/2+S/2+1)^2 positions and the refinement search are performed. The refinement search in this case often includes SAD calculation of M x N area for (1+1+1)^2 points. Therefore, the multi-resolution technique is able to be used in DFD-based autofocus. The target resolution is able to be the "optimal" resolution determined as described herein, and the lower resolution for this hierarchical motion estimation is able to be determined by the computational cost restriction.

To determine the "optimal" resolution for DFD process: in order to find out the possible max blur size one is able to think of the extreme scenario and find out the corresponding blur size using a pre-generated data such as the one in shown in the Figure 7. For example, if the current lens position is in the near-side half range of the entire focus-able DOF range, the object at infinity will be the extreme case, and if the lens position is in the farther half of the entire focus-able DOF range, the closest object will be the extreme case. Then, depending on the obtained blur size, the resolution is chosen when the affordable matching area is big enough. This approach will guarantee that the matching area size will be big enough if the target object is located at the center of the matching area. One could also think of determining the optimal DFD resolution based on some sort of statistical information as well. How to find out the possible biggest iteration number is very similar to the method described above. The same method is able to be used except that the iteration number is used instead of the blur size based on pre-generated iteration curve such as the one shown in the Figure 7. In order to estimate the possible maximum blur size, the iteration number relationships among different resolutions is known or determined. For example, in a DFD process where blur difference between a pair of images is expressed in terms of difference in special variance, the iteration number is proportional to the resolution. For example, iteration A in 1/8 resolution will likely to yield 4A in 1/4 resolution. When estimating a possible max iteration in a higher resolution based on a lower resolution DFD result, adding a room for error (such as 4A + e in the example) is able to be useful.

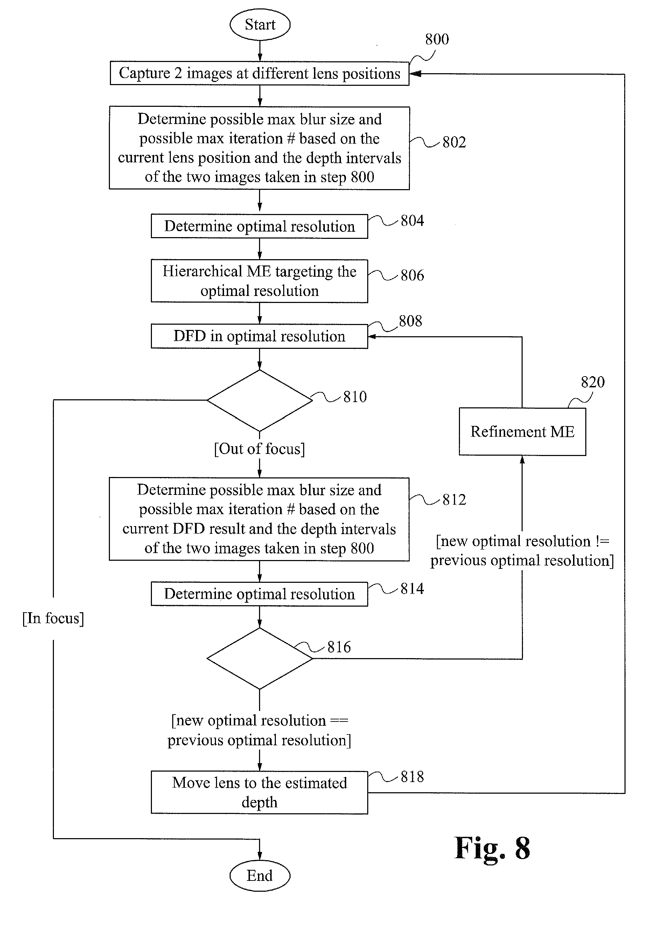

Figure 8 illustrates a flowchart of a method of multi-resolution depth-from-defocus-based autofocus according to some embodiments. In the step 800, two images are captured at different lens positions. In the step 802, the possible maximum blur size and the possible maximum iteration number are determined based on the current lens position and the depth intervals of the two images taken in the step 802. In the step 804, an optimal resolution is determined. In the step 806, motion estimation targeting the optimal resolution is implemented. In some embodiments, the motion estimation in the step 806 is hierarchical motion estimation targeting the optimal resolution. In the step 808, DFD in optimal resolution is implemented. In the step 810, it is determined if the image is in focus or out of focus. If the image is in focus, the process ends. If the image is out of focus, the possible maximum blur size and possible maximum iteration number is determined based on the DFD result and the depth intervals of the two images taken in the step 802, in the step 812. In the step 814, the optimal resolution is determined. In the step 816, it is determined if the new optimal resolution equals the previous optimal resolution. If the new optimal resolution equals the previous optimal resolution, the lens is moved to the estimated depth in the step 818, and the process returns to the step 800. If the new optimal resolution does not equal the previous optimal resolution, the refinement motion estimation is implemented in the step 820, and the process returns to the step 808. In some embodiments, the order of the steps is modified. In some embodiments, more or fewer steps are implemented.

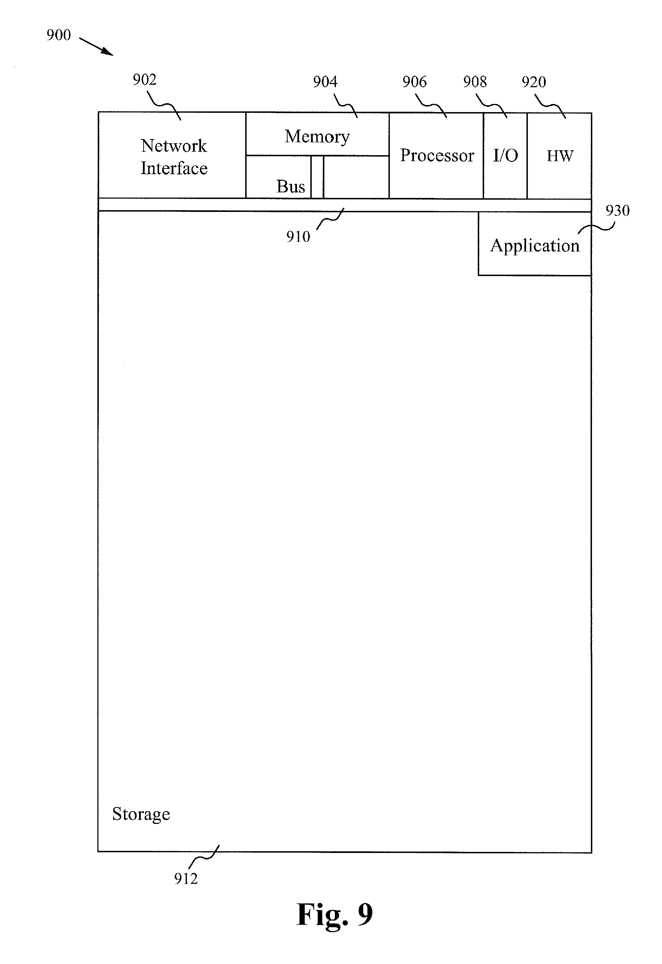

Figure 9 illustrates a block diagram of an exemplary computing device 900 configured to implement the autofocus method according to some embodiments. The computing device 900 is able to be used to acquire, store, compute, process, communicate and/or display information such as images and videos. In general, a hardware structure suitable for implementing the computing device 900 includes a network interface 902, a memory 904, a processor 906, I/O device(s) 908, a bus 910 and a storage device 912. The choice of processor is not critical as long as a suitable processor with sufficient speed is chosen. The memory 904 is able to be any conventional computer memory known in the art. The storage device 912 is able to include a hard drive, CDROM, CDRW, DVD, DVDRW, flash memory card or any other storage device. The computing device 900 is able to include one or more network interfaces 902. An example of a network interface includes a network card connected to an Ethernet or other type of LAN. The I/O device(s) 908 are able to include one or more of the following: keyboard, mouse, monitor, display, printer, modem, touchscreen, button interface and other devices. Autofocus application(s) 930 used to perform the autofocus method are likely to be stored in the storage device 912 and memory 904 and processed as applications are typically processed. More or less components shown in Figure 9 are able to be included in the computing device 900. In some embodiments, autofocus hardware 920 is included. Although the computing device 900 in Figure 9 includes applications 930 and hardware 920 for the autofocus, the autofocus method is able to be implemented on a computing device in hardware, firmware, software or any combination thereof. For example, in some embodiments, the autofocus applications 930 are programmed in a memory and executed using a processor. In another example, in some embodiments, the autofocus hardware 920 is programmed hardware logic including gates specifically designed to implement the autofocus method.

In some embodiments, the autofocus application(s) 930 include several applications and/or modules. In some embodiments, modules include one or more sub-modules as well. In some embodiments, fewer or additional modules are able to be included.

Examples of suitable computing devices include a personal computer, a laptop computer, a computer workstation, a server, a mainframe computer, a handheld computer, a personal digital assistant, a cellular/mobile telephone, a smart appliance, a gaming console, a digital camera, a digital camcorder, a camera phone, a smart phone, a portable music player, a tablet computer, a mobile device, a video player, a video disc writer/player (e.g., DVD writer/player, Blu-ray® writer/player), a television, a home entertainment system or any other suitable computing device.

To utilize the multi-resolution depth-from-defocus-based autofocus method, a user acquires a video/image such as on a digital camcorder, and before or while the content is acquired, the autofocus method automatically focuses on the data. The autofocus method occurs automatically without user involvement.

In operation, the multi-resolution depth-from-defocus-based autofocus enables achieving a DFD-based autofocus accuracy of a desired resolution at lower computational cost. Additionally, the multi-resolution depth-from-defocus-based autofocus overcomes the real world restriction of the size limit for the matching area that can be implemented in a system (given a certain restriction on the number of pixels in a matching area, working in the lower resolution enables capturing a bigger blur size than in a higher resolution).

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

### SOME EMBODIMENTS OF MULTI-RESOLUTION DEPTH-FROM-DEFOCUS-BASED AUTOFOCUS

1. A method of autofocusing programmed in a memory of a device comprising:
   a. determining an optimal resolution based on estimating a maximum iteration number and a blur size fitting matching area;
   b. performing depth from defocus for the optimal resolution; and
   c. repeating depth from defocus until autofocus at the optimal resolution is achieved.
2. The method of clause 1 further comprising acquiring content.
3. The method of clause 2 wherein the content comprises a first image and a second image.
4. The method of clause 3 wherein the first image is acquired at a first lens position and the second image is acquired at a second lens position.
5. The method of clause 1 further comprising implementing hierarchical motion estimation targeting the optimal resolution.
6. The method of clause 2 further comprising:
   a. determining if the content is in focus;
   b. if the content is in focus, then the method ends; and
   c. if the content is out of focus, then the blur size and the possible maximum iteration number is determined based on the depth from defocus result.
7. The method of clause 6 further comprising determining a new optimal resolution.
8. The method of clause 7 further comprising:
   a. determining if the new optimal resolution equals the previous optimal resolution;
   b. if the new optimal resolution equals the previous optimal resolution, the lens is moved to the estimated depth and the method returns to acquiring content; and
   c. if the new optimal resolution does not equal the previous optimal resolution, the refinement motion estimation is implemented and the method returns to implementing depth from defocus.
9. The method of clause 1 wherein the optimal resolution comprises some or all of the following criteria: a highest resolution where a possible blur size fits in a matching area, the highest resolution where a depth from defocus process with a possible biggest iteration number is affordable in terms of computational cost and to estimate the possible maximum blur size based on the depth from defocus result at lower resolution.
10. The method of clause 1 wherein the device is selected from the group consisting of a personal computer, a laptop computer, a computer workstation, a server, a mainframe computer, a handheld computer, a personal digital assistant, a cellular/mobile telephone, a smart appliance, a gaming console, a digital camera, a digital camcorder, a camera phone, a smart phone, a portable music player, a tablet computer, a mobile device, a video player, a video disc writer/player, a television, and a home entertainment system.
11. A method of autofocusing programmed in a memory of a device comprising:
   a. acquiring content;
   b. determining a blur size and a maximum iteration number based on a current lens position;
   c. determining an optimal resolution;
   d. implementing hierarchical motion estimation targeting the optimal resolution;
   e. implementing depth from defocus in the optimal resolution; and
   f. determining if the content is in focus.
12. The method of clause 11 wherein the content comprises a first image and a second image.
13. The method of clause 12 wherein the first image is acquired at a first lens position and the second image is acquired at a second lens position.
14. The method of clause 11 further comprising:
   a. if the content is in focus, then the method ends; and
   b. if the content is out of focus, then the blur size and the possible maximum iteration number is determined based on the depth from defocus result.
15. The method of clause 14 further comprising determining a new optimal resolution.
16. The method of clause 15 further comprising:
   a. determining if the new optimal resolution equals the previous optimal resolution;
   b. if the new optimal resolution equals the previous optimal resolution, the lens is moved to the estimated depth and the method returns to acquiring content; and
   c. if the new optimal resolution does not equal the previous optimal resolution, the refinement motion estimation is implemented and the method returns to implementing depth from defocus.
17. The method of clause 11 wherein the optimal resolution comprises some or all of the following criteria: a highest resolution where a possible blur size fits in a matching area, the highest resolution where a depth from defocus process with a possible biggest iteration number is affordable in terms of computational cost and to estimate the possible maximum blur size based on the depth from defocus result at lower resolution.
18. The method of clause 11 wherein the device is selected from the group consisting of a personal computer, a laptop computer, a computer workstation, a server, a mainframe computer, a handheld computer, a personal digital assistant, a cellular/mobile telephone, a smart appliance, a gaming console, a digital camera, a digital camcorder, a camera phone, a smart phone, a portable music player, a tablet computer, a mobile device, a video player, a video disc writer/player, a television, and a home entertainment system.
19. An apparatus comprising:
   a. an image acquisition component for acquiring a plurality of images;
   b. a memory for storing an application, the application for:
      i. determining a blur size and a maximum iteration number based on a current lens position;
      ii. determining an optimal resolution;
      iii. implementing hierarchical motion estimation targeting the optimal resolution;
      iv. implementing depth from defocus in the optimal resolution; and
      v. determining if an image of the plurality of images is in focus; and
   c. a processing component coupled to the memory, the processing component configured for processing the application.
20. The apparatus of clause 19 wherein a first image of the plurality of images is acquired at a first lens position and the second image of the plurality of images is acquired at a second lens position.
21. The apparatus of clause 19 wherein the application further comprises:
   a. if the content is in focus, then the method ends; and
   b. if the content is out of focus, then the blur size and the possible maximum iteration number is determined based on the depth from defocus result.
22. The apparatus of clause 21 wherein the application further comprises determining a new optimal resolution.
23. The apparatus of clause 22 wherein the application further comprises:
   a. determining if the new optimal resolution equals the previous optimal resolution;
   b. if the new optimal resolution equals the previous optimal resolution, the lens is moved to the estimated depth and the method returns to acquiring content; and
   c. if the new optimal resolution does not equal the previous optimal resolution, the refinement motion estimation is implemented and the method returns to implementing depth from defocus.
24. The apparatus of clause 19 wherein the optimal resolution comprises some or all of the following criteria: a highest resolution where a possible blur size fits in a matching area, the highest resolution where a depth from defocus process with a possible biggest iteration number is affordable in terms of computational cost and to estimate the possible maximum blur size based on the depth from defocus result at lower resolution.

The present invention has been described in terms of specific embodiments incorporating details to facilitate the understanding of principles of construction and operation of the invention. Such reference herein to specific embodiments and details thereof is not intended to limit the scope of the claims appended hereto. It will be readily apparent to one skilled in the art that other various modifications may be made in the embodiments chosen for illustration without departing from the scope of the invention as defined by the claims.

## Claims

1. A method of autofocusing programmed in a memory of a device comprising:
a. determining an optimal resolution based on estimating a maximum iteration number and a blur size fitting matching area;
b. performing depth from defocus for the optimal resolution; and
c. repeating depth from defocus until autofocus at the optimal resolution is achieved.

2. The method of claim 1 further comprising acquiring content.

3. The method of claim 2 wherein the content comprises a first image acquired at a first lens position and a second image acquired at a second lens position.

4. The method of claim 1 further comprising implementing hierarchical motion estimation targeting the optimal resolution.

5. The method of claim 2 further comprising:
a. determining if the content is in focus;
b. if the content is in focus, then the method ends; and
c. if the content is out of focus, then the blur size and the possible maximum iteration number is determined based on the depth from defocus result.

6. The method of claim 5 further comprising determining a new optimal resolution.

7. The method of claim 6 further comprising:
a. determining if the new optimal resolution equals the previous optimal resolution;
b. if the new optimal resolution equals the previous optimal resolution, the lens is moved to the estimated depth and the method returns to acquiring content; and
c. if the new optimal resolution does not equal the previous optimal resolution, the refinement motion estimation is implemented and the method returns to implementing depth from defocus.

8. The method of claim 1 wherein the optimal resolution comprises some or all of the following criteria: a highest resolution where a possible blur size fits in a matching area, the highest resolution where a depth from defocus process with a possible biggest iteration number is affordable in terms of computational cost and to estimate the possible maximum blur size based on the depth from defocus result at lower resolution.

9. The method of claim 1 wherein the device is selected from the group consisting of a personal computer, a laptop computer, a computer workstation, a server, a mainframe computer, a handheld computer, a personal digital assistant, a cellular/mobile telephone, a smart appliance, a gaming console, a digital camera, a digital camcorder, a camera phone, a smart phone, a portable music player, a tablet computer, a mobile device, a video player, a video disc writer/player, a television, and a home entertainment system.

10. An apparatus comprising:
a. an image acquisition component for acquiring a plurality of images;
b. a memory for storing an application, the application for:
i. determining a blur size and a maximum iteration number based on a current lens position;
ii. determining an optimal resolution;
iii. implementing hierarchical motion estimation targeting the optimal resolution;
iv. implementing depth from defocus in the optimal resolution; and
v. determining if an image of the plurality of images is in focus; and
c. a processing component coupled to the memory, the processing component configured for processing the application.

11. The apparatus of claim 10 wherein a first image of the plurality of images is acquired at a first lens position and the second image of the plurality of images is acquired at a second lens position.

12. The apparatus of claim 10 wherein the application further comprises:
a. if the content is in focus, then the method ends; and
b. if the content is out of focus, then the blur size and the possible maximum iteration number is determined based on the depth from defocus result.

13. The apparatus of claim 12 wherein the application further comprises determining a new optimal resolution.

14. The apparatus of claim 13 wherein the application further comprises:
a. determining if the new optimal resolution equals the previous optimal resolution;
b. if the new optimal resolution equals the previous optimal resolution, the lens is moved to the estimated depth and the method returns to acquiring content; and
c. if the new optimal resolution does not equal the previous optimal resolution, the refinement motion estimation is implemented and the method returns to implementing depth from defocus.

15. The apparatus of claim 10 wherein the optimal resolution comprises some or all of the following criteria: a highest resolution where a possible blur size fits in a matching area, the highest resolution where a depth from defocus process with a possible biggest iteration number is affordable in terms of computational cost and to estimate the possible maximum blur size based on the depth from defocus result at lower resolution.
